# EUROPEAN PATENT APPLICATION

(11) **EP 2 923 579 A1**
(43) Date of publication of application: **30.09.2015**
(21) Application number: 14001141.2
(22) Date of filing: 27.03.2014
(51) Int. Cl.: A22C 11/00

(54) **Machine for automatically peeling cured sausage**

(71) Applicant: Arctecno Aplicaciones, S.L., 17240 Llagostera (Girona) (ES)
(72) Inventor: Ramisa Usero, Joan, 17240 Llagostera (Girona) (ES)
(74) Representative: Toro Gordillo, Ignacio Maria

(57) **Abstract**

The machine of the invention consists of a frame (1), wherein the following are defined: a first infeed area (2) for feeding in the product to be processed, a cutting and peeling area (3), an output area (4) for the output of the clean and finished sausages, and a final area to which the waste products are redirected (5) for subsequent treatment. By means of a lengthwise-cutting blade (10), a crosswise-cutting blade (13) and a mechanism that grips and pulls at the skin of the cured sausage using a pair of rollers (11) that revolve in opposite directions, the sausages are peeled automatically, and can be classified by size as they leave the machine.

## Description

### Subject matter of the invention

The present invention relates to a machine that has been especially designed for automatically peeling cured sausage.

The object of the invention is, then, to provide a machine into which cured sausages are fed, which can adapt to different calibers and lengths, such that the output of the machine is a product without skin, to be subsequently cut into slices, and wherein the machine itself takes care of redirecting the waste products to a storage area for subsequent treatment.

### BACKGROUND OF THE INVENTION

In the field of practical application of the invention, that of cured sausage, it is common for the latter to be sold either inside the intestine it was cured in, or cut up into slices and packaged in trays.

In the second of these cases, while the slicing and packaging may be fully automatic, the sausage may either be packaged unpeeled, or else must be peeled manually by the factory workers before being fed into the slicing machine.

As such, it would be advantageous to have a machine that could peel cured sausage automatically, in order to make the entire process automatic.

### DESCRIPTION OF THE INVENTION

The machine for automatically peeling cured sausage proposed by the invention offers a completely satisfactory solution to the problem set out above, thanks to its novel and highly effective structuring.

To this end, the machine of the invention is made up of a considerably large frame or shell, wherein four clearly distinct areas are defined: a first infeed area for feeding in the product to be processed, a cutting and peeling area, an output area for the output of clean and finished sausages, and a final area to which the waste products are redirected for subsequent treatment.

More specifically, the infeed area consists of a sort of tilted tray, onto which the cured sausages to be peeled are placed, such that a sausage sensor is arranged in correspondence with its lower end, as well as a cylinder in which an arm is provided, which moves lengthwise over the lower edge of the tray from its rear end, until coming into contact with the end of the sausage and applying lengthwise pressure to it, thus creating a small deformation inside the sausage, to which the inclusion of an element that injects pressurized air must be added, which helps to detach the skin from the meat. This mechanism also serves to calculate the length of the sausage, and to operate in consequence when cutting the ends of the sausage.

Afterwards, a mechanism places the sausage in the cutting area, wherein a conveyor belt is arranged that moves the sausage along a lengthwise guide, wherein a blade is arranged from above that is in charge of making a lengthwise cut in the skin of the sausage. Likewise, in correspondence with the end of said guide, another blade is arranged, which makes a crosswise cut in the end of the cured sausage, without making a complete crosswise cut through the skin. Below this set of elements, a pair of parallel rollers is arranged, which revolve in opposite directions, and in so doing pull this cut end downwards, along with the skin of the cured sausage, in such a way that this pulling is synchronized with the forward movement of the sausage, until reaching its rear end, upon which the crosswise blade acts once more, cutting this other end, and moving the clean sausage on to the output area, while the waste products are handled by means of mechanisms located below, such as conveyor belts and the like, so as to be stored in a waste storage container.

As for the output area, the machine makes it possible to classify, by means of three product outlets, into three length ranges, as programmed through the operating panel. To this end, once the sausage leaves the cutting area, it encounters a system of cylinders that move the sausage vertically up to the different output trays provided in said area.

Optionally, the machine could be supplemented by an automatic infeed system, though such a device is not the subject matter of the present invention.

### DESCRIPTION OF THE DRAWINGS

To supplement the description provided below, and for the purpose of helping to make the characteristics of the invention more readily understandable, in accordance with a preferred practical exemplary embodiment thereof, said description is accompanied by a set of figures, wherein, by way of illustration and not limitation, the following has been represented:
Figure 1.- Shows a perspective view of a machine for automatically peeling cured sausage, made in accordance with the subject matter of the present invention.
Figure 2.- Shows a plan view of the items in the previous figure.
Figure 3.- Shows a profile view of the items in the previous figures.
Figure 4.- Shows a side elevation view of a close-up of the machine seen inside the cutting mechanism.

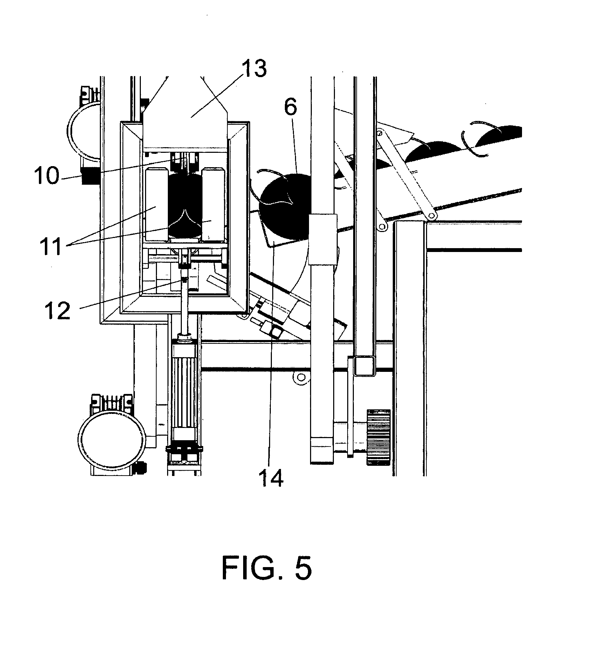

Figure 5.- Shows a front elevation view of the items in the previous figure.

### PREFERRED EMBODIMENT OF THE INVENTION

As can be seen in the figures mentioned above, the machine of the invention is made up of a frame (1), wherein the following are defined: a first infeed area (2) for feeding in the product to be processed, a cutting and peeling area (3), an output area (4) for the output of clean and finished sausages, and a final area to which the waste products are redirected (5) for subsequent treatment.

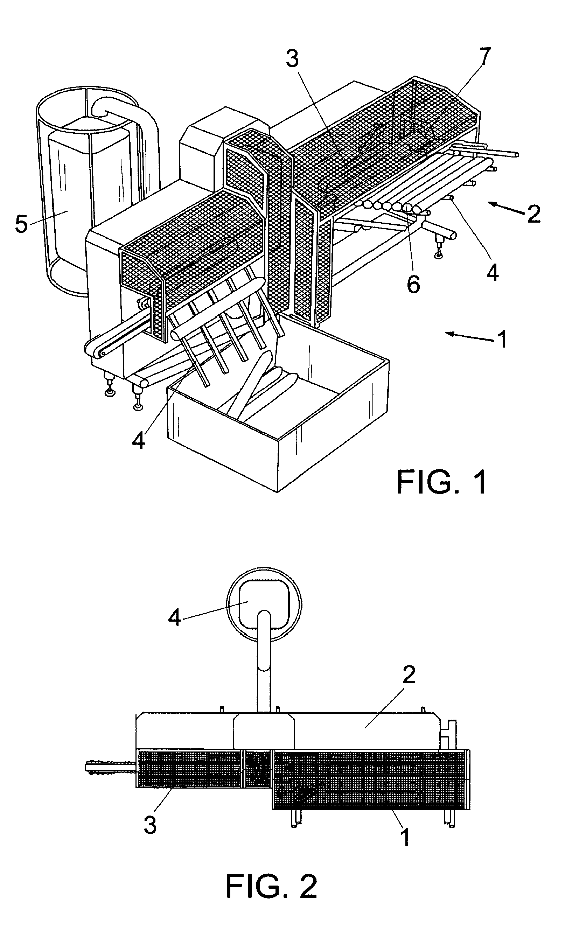

As can be observed in figure 1, the infeed area consists of a sort of tilted tray or guides (14), onto which the cured sausages (6) to be peeled are placed, such that in correspondence with its lower end a sausage sensor is arranged, as well as a cylinder in which an arm (7) is provided, which moves lengthwise over the lower edge of the tray from its rear end, gently applying pressure to the sausage, which arm (7) is equipped with an element that injects pressurized air under the skin of the sausage, which helps to detach the skin from the meat.

Once this process has been carried out, a mechanism is in charge of lifting the sausage to be peeled, and unloading it onto a guide (8) arranged in the cutting area (2).

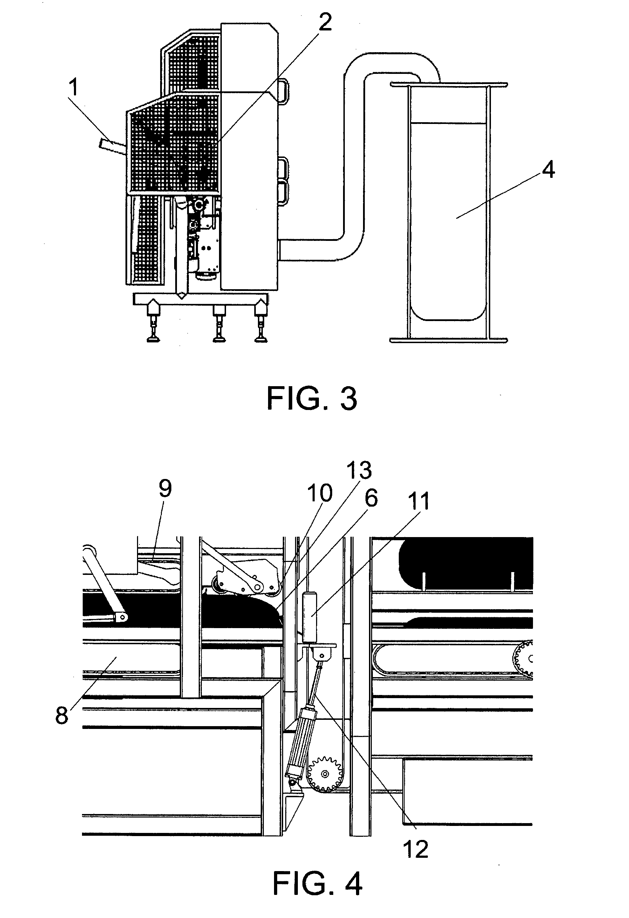

As can be observed in figure 4, said guide is supplemented by conveyor belts (9) that move the sausage (6) lengthwise along the guide; it has been provided that during this movement the sausages will come into contact with a lengthwise-cutting blade (10).

Furthermore, at the end of said guide (8), a mechanism is arranged for gripping the intestine casing, made up of two rollers (11) mounted on a bobbing arm (12), which revolve in opposite directions, such that when the sausage presses against these elements, the gripper bobs downwards, and the rollers move towards one another. By so moving, they pull at the skin, for which purpose a crosswise-cutting blade (13) has been provided at said end, which is in charge of cutting the tips of the cured sausages, without cutting them all the way off, in order to allow the aforementioned rollers (11) to pull the skin downwards, towards a series of conveyor belts that redirect the waste products (the skins and tips of the cured sausages) towards a waste storage container.

In this way, the clean sausage moves on to the output area (4), in which, although in figure 1 just one output tray has been represented, different trays could optionally be arranged, based on length ranges previously established by the corresponding sensors, for which purpose a system of cylinders has been provided that move the sausage vertically up to the different output trays.

As mentioned previously, the machine could optionally be supplemented by an automatic infeed system, though such a device is not the subject matter of the present invention.

## Claims

1. Machine for automatically peeling cured sausage, **characterized in that** it is made up of a frame (1), wherein the following are defined: a first infeed area (2) for feeding in the product to be processed, a cutting and peeling area (3), an output area (4) for the output of clean and finished sausages, and a final area to which the waste products are redirected (5) for subsequent treatment, wherein it has been provided that the infeed area should consist of a sort of tilted tray or guides (14), onto which the sausages (6) are placed, equipped with a mechanism that unloads the sausages onto a guide (8) arranged in the cutting area (2), which is accompanied by conveyor belts (9) that move the sausage (6) lengthwise along the guide, with the special feature that in said area a lengthwise-cutting blade (10) is arranged, as well as, in correspondence with the sausage output end, a mechanism for gripping the intestine casing and redirecting the waste products to a waste area (5), and a crosswise-cutting blade (13), and wherein the output area (4) includes means of moving the clean sausages out to the collection area.

2. Machine for automatically peeling cured sausage, according to claim 1, **characterized in that** in the output area (4) different trays are arranged, based on length ranges previously established for the peeled sausages, wherein said area is equipped with a system of cylinders that move the sausage vertically up to the different output trays.

3. Machine for automatically peeling cured sausage, according to claim 1, **characterized in that** in the tray of the infeed area (2) a sausage sensor is arranged, as well as a cylinder in which an arm (7) is provided, which moves lengthwise over the lower edge of the tray from its rear end, until applying lengthwise pressure to the sausage, which arm is equipped with an element that injects pressurized air under the skin of the sausage.

4. Machine for automatically peeling sausage, according to claim 1, **characterized in that** two rollers (11) make up part of the mechanism that grips the skin, which are mounted on a bobbing arm (12), and revolve in opposite directions.
